(19) Europäisches Patentamt
European Patent Office
Office européen des brevets

(11) Publication number : 0 204 816 B1

# (12) EUROPEAN PATENT SPECIFICATION

(45) Date of publication of patent specification : 06.11.91 Bulletin 91/45

(51) Int. Cl.$^5$ : C08F 8/20

(21) Application number : 86900383.0

(22) Date of filing : 26.11.85

(86) International application number : PCT/US85/02329

(87) International publication number : WO 86/03499 19.06.86 Gazette 86/13

## (54) HALOGENATED ETHYLENE POLYMERS WITH IMPROVED RESISTANCE TO AGGLOMERATION.

(30) Priority : 05.12.84 US 678442

(43) Date of publication of application : 17.12.86 Bulletin 86/51

(45) Publication of the grant of the patent : 06.11.91 Bulletin 91/45

(84) Designated Contracting States : BE DE FR GB IT NL SE

(56) References cited :
FR-A- 2 381 069
GB-A- 922 678
GB-A- 1 167 460
US-A- 4 029 862
US-A- 4 456 547
See also references of WO8603499

(73) Proprietor : THE DOW CHEMICAL COMPANY
2030 Dow Center Abbott Road P.O. Box 1967
Midland Michigan 48640-1967 (US)

(72) Inventor : JONES, Edward
11995 Parkbrook Avenue
Baton Rouge, LA 70816 (US)
Inventor : MEISKE, Larry, A.
7846 Wimbledon Avenue
Baton Rouge, LA 70810 (US)
Inventor : YOUNG, Warren, L.
9542 East Damuth Place
Baton Rouge, LA 70815 (US)

(74) Representative : Sternagel, Hans-Günther, Dr. et al
Patentanwälte Dr. Michael Hann Dr. H.-G. Sternagel Sander Aue 30
W-5060 Bergisch Gladbach 2 (DE)

EP 0 204 816 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

The present invention relates to a method for preparing halogenated ethylene interpolymer resins which are resistant to agglomeration. More particularly, the present invention relates to the preparation of agglomeration-resistant chlorinated ethylene polymer resins.

"Blocking" is a term used to define the tendency of a polymeric resinous powder to form clumps or lumps by agglomeration. Blocking is undesirable because users of resinous powders want free-flowing powders for blending purposes. Resinous powders which block during storage or transport thereof require additional handling to break up agglomerates if blocking is not unacceptably high. Resinous powders with excessively high blocking are of little value because they tend to fuse into a solid mass. In other words, as blocking decreases, desirability and practical utility increase.

From US-A-4,029,862 olefin polymer chlorination products are known, having particle size predominantly in the range from 300-600 μm, a bulk density of from 0.40-0.56 g/cm³ and being substantially free from undesirable agglomeration during or following the chlorination. The polymers may be homopolymers of ethylene or copolymers of ethylene and up to 5 weight percent of aliphatic hydrocarbon alpha-monoolefin and have chlorine contents up to 30 percent by weight. Higher chlorine contents up to 65 percent by weight are also possible. The polymers have a high level of crystallinity which is also evident from the heat of fusion values.

Contrary thereto, the present invention refers to the preparation of amorphous polymers having low values of heat of fusion and being also non-agglomerating.

The present invention refers to a method for preparing an agglomeration-resistant, halogenated derivative of an ethylene polymer having polymerized therein, on a polymer weight basis, from 95 - 99 weight percent ethylene and from 5 - 1 weight percent of a 1-olefin monomer copoly merizable therewith, in which said halogenated derivate has a chemically combined halogen content of from 15 - 28 weight percent of the derivative, and a weight based median particle size distribution of from 200 - 900 μm, and being prepared from said ethylene polymer having a weight-based median particle size of from 160 - 600 μm, and a particle size distribution such that, on a weight basis, more than 60 percent of the particles have a particle size of from 150 - 850 μm, and a bulk density of from 0.26 - 0.56 g/cm³, by halogenation in an aqueous slurry process resulting in a derivative having a heat of fusion of from 0 - 3 calories /g and a neat wedge blocking value of from 0 - 60 kilograms.

The derivative is prepared from an ethylene polymer resin which has polymerized therein from 95 to 99 weight percent ethylene and from five to one weight percent of 1-olefin monomer copolymerizable therewith, both percentages being based on polymer weight. More than one 1-olefin monomer may be polymerized with ethylene provided the total amount of 1-olefin monomer does not exceed five weight percent.

As used herein, the term "weight-based median particle size" means a particle size above and below which there is, in a sieve analysis of a resin sample, an equal weight of resin.

As used herein, the term "ethylene polymer" means interpolymers of ethylene having polymerized therein ethylene and a total amount of 1-olefing monomer copolymerizable therewith. The total amount is suitably from 1 to 5 percent by weight of interpolymer. The total amount of 1-olefin monomer is beneficially from 1.2 to 3.5 percent by weight of interpolymer. More than one 1-olefin monomer may comprise the total amount. Suitable 1-olefin monomers include 1-butene and 1-octene. Ethylene polymer resins suitable for purposes of the present invention desirably meet the following criteria.

One criterion for ethylene polymer resins to prepare the halogenated product is a weight-based median particle size of from 160 to 600 μm. The median particle size is beneficially from 160 to 450 μm.

A criterion of the ethylene polymer to prepare the halogenated product is a weight-based particle size distribution in which more than 60 percent by weight of the particles have a size of from 150 to 850 μm.

Beneficially, more than 60 percent by weight of the particles have a size of from 150 to 500 μm. Desirably, more than 60 percent by weight of the particles have a size of from 150 to 425 μm.

A third criterion is a bulk density of from 0.25 to 0.60 grams per cubic centimeter. The ethylene polymer may have a density of from 0.935 to 0.950 grams per cubic centimeter.

Ethylene polymer resins meeting the aforementioned criteria are beneficially prepared under conditions characteristic of Ziegler polymerization in the presence of a transition metal-containing catalyst and at least one cocatalyst or activator. The cocatalyst is selected from the group consisting of aluminium, boron, zinc, or magnesium compounds represented by the formulas $A1(R^3)_{3-a}X^1_a$, $B(R^3)_{3-a}X^1_a$, $MgR^3_2$, $MgR^3X^1$, $ZnR^3_2$ or mixtures thereof. In these formulas, each $R^3$ is independently a hydrocarbyl group, $X^1$ is a halogen and a is an integer of from zero to two. U S-A- 4,526,943 (Fuentes Jr., et al) discloses such a process.

The transition metal-containing catalyst is suitably prepared in accordance with U S-A- 4,456,547 (Fuentes, Jr.). The catalyst results from admixing at least one each fo four components in an inert hydrocarbon diluent and in an atmosphere which excludes moisture and oxygen. One component is a hydrocarbon-soluble

organomagnesium material such as butylethylmagnesium. A second component is an organic alcoholic hydroxyl-containing material such as n-propyl alcohol. A third component is a reducing halide source such as ethylaluminum dichloride. A fourth component is a transition metal-containing reaction product. The reaction product is formed by mixing, at a temperature and for a time sufficient to cause a desired color change, (1) at least one transition metal (Tm) compound and (2) at least one organozinc compound. The Tm compound has at least one hydrocarbyloxy group attached to the transition metal. The four components are added in the order stated except that addition of the third and fourth components can be reversed without adverse effects. The components are present in amounts sufficient to provide atomic ratios as follow: (a) Mg:Tm of 0.1:1 to 100:1; (b)Zn:Tm of 0.05:1 to 10:1; (c) Cl:Mg of 2:1 to 20:1; and (d) OH:total number of hydrocarbyl groups attached to the magnesium atom of the organomagnesium material of 0.5:1 to 1.5:1.

The transition metal-containing catalyst may also be prepared by admixing at least one each of four components in an inert hydrocarbon diluent and in an atmosphere which excludes moisture and oxygen. One component is a hydrocarbon-soluble organomagnesium material represented by the formula $R_2Mg.xMR'_{x'}$. In the formula each R is independently a hydrocarbyl group having from 1 to 20-carbon atoms; each R′ is independently hydrogen or a hydrocarbyl group having from 1 to 20 carbon atoms; M is aluminum (Al) or zinc (Zn); x is an integer of from 0 to 10 and is sufficient to render the organomagnesium component hydrocarbon soluble; and x′ has a value equal to the valence of M. The second and third components are suitably the same as those taught in U S-A- 4,456,547. The fourth component is represented by the formula $TmY_nX_{z-n}$ or

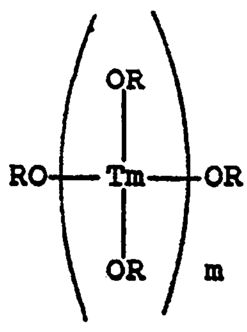

In these formulas Tm is titanium in its highest stable valence state and Y is oxygen or OR″. Each R is independently a hydrocarbyl group having from one to 20 carbon atoms and each R″ is independently hydrogen or R. X is a halogen, z is an integer equal to the valence state of Tm, m is an-integer of from one to 20 and n is an integer of from zero to four. The components are added in the order stated except that addition of the third and fourth components can be reversed without adverse effects. The components are present in amounts sufficient to provide atomic ratios as follows: (a)Mg:Tm of from 0.1:1 to 100:1, desirably from 1:1 to 40:1; (b) Cl:Mg of from 3:1 to 20:1, desirably from 6:1 to 20:1; and (c) OH: metal atom from the first component of from 2:1 to 3:1.

Other catalysts and processes may be used provided the polyethylene resins and ethylene polymer resins produced therewith meet the criteria specified herein.

The halogenated derivatives of ethylene polymers are suitably chlorinated derivatives. The chlorinated derivatives are respectively referred to herein as chlorinated ethylene polymer resins.

The chlorinated ethylene polymer resins have three distinctive physical properties. First, they have neat wedge blocking value of from 0 to 60 kilograms. The neat wedge blocking value is beneficially from 0 to 50 kilograms and desirably from 0 to 35 kilograms. Second, they have a weight-based median particle size of from 200 to 900 µm. The median particle size is beneficially from 200 to 700 µm and desirably from 200 to 500 µm. Third, they have a particular chemically combined halogen, preferably chlorine, content. The chlorinated ethylene polymer resins have a chemically combined chlorine content which is suitably from 15 to 28 and beneficially from 19 to 26 percent by weight. It has been found that at chlorine contents of greater than 28 percent by weight, blocking of chlorinated ethylene polymer resins becomes excessive.

The chlorinated ethylene polymer resins are prepared by chlorinated of the polyethylene resins wherein the chlorination is accomplished by aqueous slurry procedures.

The chlorinated ethylene polymer resins prepared by the process of the present invention may be used in any application where chlorinated polyethylene is conventionally used. One such application is as an impact modifier for polyvinyl chloride resins.

The followiny examples are only for purposes of illustration and are not to be viewed as limiting the present invention. All parts and percentages are on a weight basis unless otherwise stated. Examples of the present

invention are represented by Arabic numerals whereas comparative examples not part of the present invention are represented by alphabetic characters.

Test Procedures

A. Sieve Analysis

Test sieves having a diameter of(8 inches) 3.15 centimeters and meeting American Society for Testing and Materials (ASTM) Test E-11 specifications were used for particle size analysis. The test sieves were available from W. S. Tyler Incorporated. Each test sieve had a different mesh opening. The test sieves were stacked in descending order with the sieve having the largest mesh or screen opening being at the top. A pan was placed under the lower test sieve and a cover was placed over the top test sieve to form a test sieve assembly.

In operation, the cover was removed and a one hundred gram resin sample was placed on the screen of the top test sieve. The cover was then replaced and the test sieve assembly was secured on a sieve shaker. The sieve shaker, commercially available from Arthur H. Thomas Company, was connected to a timer. The rate of agitation of the sieve shaker was set on a rheostat scale which ranged from a setting of zero to a setting of one hundred. The resin sample was shaken for a period of 15 minutes at a rheostat scale setting of from 80 to 100.

After the fifteen minute period, the sieve shaker was stopped. Each of the test sieves was weighed first with and then without resin trapped thereon to determine sieve content weight. Weighing was done with a laboratory balance sensitive to 0.1 gram. Percentage of resin retained on screen was determined by the following formula:

$$\% \text{ Retained} = \frac{\text{sieve content weight} \times 100}{\text{resin sample weight}}$$

B. Wedge Blocking Test

The wedge blocking test used herein is disclosed in U S-A- 4,412,448 (Flynn, et al). The test comprises two steps. In one step, a sample of particulate polymer resin is compressed between substantially parallel surfaces in a circular mold at a temperature of 50° Centigrade and a compression pressure of 515 Kilopascals (kPa) gauge for a period of three hours to form a test cake. The mold is then cooled to a temperature of 25°C and the test cake is removed therefrom. In a second step, an elongated, triangular-shaped wedge is forced into the cake at a constant rate of speed until the cake breaks. The force required to break the cake is known as the blocking value. The wedge has a sharp v-shaped configuration at an angle of 60° which extends to the opposite edges of the test cake. An Instron tester described in ASTM Test D638- (1979) is used to force the wedge into the test cake.

The wedge blocking test was used to evaluate resins without inorganic particulate antiblock additives in admixture therewith.

Chlorinated of Ethylene Polymer Resins

Each of the ethylene polymer resins was chlorinated by an aqueous slurry process in an enclosed vessel. Each resin was slurried with about nine times its weight of water in an enclosed vessel. Gaseous chlorine was introduced into the slurry at a rate of 0.2 kilograms of chlorine per kilogram of ethylene polymer per hour. Chlorination began at a slurry temperature of 98° Centigrade. The slurry temperature was then slowly increased over a period of fourteen minutes to a temperature of 110° Centigrade. The chlorinated ethylene polymer had a chemically combined chlorine content of eight percent by weight of polymer after the fourteen minute period. The temperature of the slurry was then slowly increased over a period of 95 minutes to a temperture of 131° Centigrade. After the 95 munite period the chlorinated polymer had a chemically combined chlorine content of percent by weight of polymer as shown in Table I. Chlorination was then terminated and the slurry was filtered to remove the chlorinated ethylene. The chlorinated ethylene polymer was washed and then dried at a temperature of 60° Centigrade for a period of 24 hours.

Effect of Chlorine Content of Chlorinated Ethylene Polymer Upon Blocking

Samples of an ethylene polymer prepared by The Dow Chemical Company were chlorinated as described herein to different chlorine contents to determine the effect of chlorine content upon blocking. The ethylene polymer had polymerized therein 98.2 weight percent ethylene and 1.8 weight percent 1-butene, both percentages being based upon polymer weight. The ethylene polymer had a nominal melt index of 1.1 decigrams per minute and a density of from 0.948 grams per cubic centimeter. Following chlorination, wedge blocking test cakes were prepared using the procedure described herein. The test cakes were then subjected to the wedge blocking test described herein. Results of the wedge blocking test are presented in Table VI together with chlorine content and heat of fusion.

Wedge Blocking Test Results

Following chlorination of each of the ethylene polymer starting materials, wedge blocking test cakes were prepared using the procedure described herein.

TABLE I - Chlorinated Ethylene Polymer Wedge Blocking Test Results

| Sample | Chlorine Content(%) | Heat of Fusion (Calories per gram) | Neat Wedge Blocking Value (kilograms) |
|---|---|---|---|
| 3 | 21.4 | 1.13 | 7.7 |
| 4 | 23.7 | 2.59 | 11.9 |
| 5 | 26.2 | 0.09 | 10.9 |
| F x) | 28.2 | 1.09 | 71.6 |

x) Comparative Example

A review of the data presented in Table I demonstrates that as chlorine content increases beyond 28 percent by weight of polymer, blocking becomes unacceptably high. Similar results are obtained with other halogenated ethylene polymers which are representative of the method of the present invention.

**Claims**

1. A method for preparing an agglomeration-resistant, halogenated derivative of an ethylene polymer having polymerized therein, on a polymer weight basis, from 95 - 99 weight percent ethylene and from 5 - 1 weight percent of a 1-olefin monomer copolymerizable therewith, in which said halogenated derivative has a chemically combined halogen content of from 15 - 28 weight percent of the derivative, and a weight based median particle size distribution of from 200 - 900 μm, and being prepared from said ethylene polymer having a weight-based median particle size of from 160 - 600 μm, and a particle size distribution, such that, on a weight basis, more thant 60 percent of the particles have a particle size of from 150 -850 μm, and a bulk density of from 0.26 - 0.56 g/cm$^3$, by halogenation in an aqueous slurry process resulting in a derivative having a heat of fusion of from 0 - 3 calories /g and a neat wedge blocking value of from 0 - 60 kilograms.

2. The process of claim 1, wherein the halogen is chlorine.

3. The process of claim 1, wherein the chlorine content is from 19 - 26 percent by weight of the polymer.

4. The process of claim 1, wherein the ethylene polymer to prepare the halogenated product has a density of from 0.935 - 0.950 g/cm$^3$.

5. The process of claim 1, wherein the ethylene polymer to prepare the halogenated product has a weight-based size distribution such that more than 60 percent by weight of the particles have a size of from 150 - 500 μm.

6. The process of claim 1, wherein the neat wedge blocking value is from 0 - 50 kilograms.

7. The process of claim 1, wherein the derivative has a weight-based median particle size of from 200 - 500 μm.

## Patentansprüche

1. Verfahren zum Herstellen eines nicht agglomerierenden, halogenierten Derivates eines Ethylenpolymer mit, bezogen auf Gewicht des Polymeren, einpolymerisiertem von 95-99 Gew.-% Ethylen und von 5-1 Gew.-% eines 1-Olefinmonomeren, das mit Ethylen copolymerisierbar ist, wobei das halogenierte Derivat einen kombinierten chemischen Halogengehalt von 15-28 Gew.-% des Derivates und eine auf Gewicht bezogene mittlere Teilchengröffenverteilung von 200-900 µm aufweist und das hergestellt ist aus dem Ethylenpolymer mit einer auf Gewicht bezogenen mittleren Teilchengröffe von 160-600 µm und einer Teilchengröffenverteilung auf Gewichtsbasis, bei der mehr als 60 % der Teilchen eine Teilchengröffe von 150-850 µm aufweisen und das eine Schüttdichte von 0,26-0,56 g/cm³ hat, durch Halogenieren in wäßriger Aufschlämmung, wobei das Verfahren ein Derivat ergibt, das eine Schmelzwärme von 0-3 Kalorien/g und einen Keilbruchfestigkeitswert von 0-60 kg aufweist.

2. Verfahren nach Anspruch 1, **dadurch gekennzeichnet**, daß das Halogen Chlor ist.

3. Verfahren nach Anspruch 1, **dadurch gekennzeichnet**, daß der Chlorgehalt 19-26 Gew.-% des Polymeren beträgt.

4. Verfahren nach Anspruch 1, **dadurch gekennzeichnet**, daß das zur Herstellung des halogenierten Produktes verwendete Ethylenpolymer eine Dichte von 0,935-0,950 g/cm³ aufweist.

5. Verfahren nach Anspruch 1, **dadurch gekennzeichnet**, daß das zur Hertellung des halogenierten Produktes verwendete Ethylenpolymer eine auf Gewicht basierende Teilchengröffenverteilung hat, bei der mehr als 60 Gew.-% der Teilchen eine Größe von 150-500 µm aufweisen.

6. Verfahren nach Anspruch 1, **dadurch gekennzeichnet**, daß der Keilbruchfestigkeitswert von 0-50 kg beträgt.

7. Verfahren nach Anspruch 1, **dadurch gekennzeichnet**, daß das Derivat eine auf Gewicht bezogene mittlere Teilchengröße von 200-500 µm aufweist.

## Revendications

1. Procédé de préparation d'un dérivé halogéné, résistant à l'agglomération, d'un polymère d'éthylène comprenant sous forme polymérisée, sur la base de poids du polymère, de 95 à 99 pour-cent en poids d'éthylène et de 5 à 1 pour-cent d'un monomère 1-oléfinique qui peut être copolymérisé avec l'éthylène, ledit dérivé halogéné présentant une teneur en halogène chimiquement combiné de 15 à 28 pour-cent du dérivé, et une granulométrie moyenne en poids de 200 à 900 µm, et étant préparé à partir dudit polymère d'éthylène qui présente une granulométrie moyenne en poids comprise entre 160 et 600 µm, et une granulométrie telle que, sur une base de poids, plus de 60 pour-cent des particules présentent une dimension de particules comprise entre 150 et 850 µm et une densité en vrac comprise entre 0,26 et 0,56 g/cm³, procédé comportant une halogénation en suspension aqueuse de façon à former un dérivé dont la chaleur de fusion est comprise entre 0 et 3 calories/g et dont la valeur nette de prise en masse à l'aide d'un coin est comprise entre 0 et 60 kilogrammes.

2. Procédé selon la revendication 1, dans lequel l'halogène est du chlore.

3. Procédé selon la revendication 1, dans lequel la teneur en chlore est comprise entre 19 et 26 pour-cent en poids du polymère.

4. Procédé selon la revendication 1, dans lequel le polymère d'éthylène destiné à préparer le produit halogéné est d'une densité comprise entre 0,935 et 950 g/cm³.

5. Procédé selon la revendication 1, dans lequel le polymère d'éthylène destiné à préparer le produit halogéné présente une granulométrie sur une base de poids, telle que la dimension de plus de 60 pour-cent en poids des particules est comprise entre 150 et 500 µm.

6. Procédé selon la revendication 1, dans lequel la valeur nette de prise en masse à l'aide d'un coin est comprise entre 0 et 50 kilogrammes.

7. Procédé selon la revendication 1, dans lequel le dérivé présente une granulométrie moyenne en poids comprise entre 200 et 500 µm.